(19) Europäisches Patentamt
European Patent Office
Office européen des brevets

(11) **EP 4 679 360 A1**

(12) **EUROPEAN PATENT APPLICATION**
published in accordance with Art. 153(4) EPC

(43) Date of publication:
**14.01.2026 Bulletin 2026/03**

(21) Application number: 23928780.8

(22) Date of filing: **05.12.2023**

(51) International Patent Classification (IPC):
***G06T 5/70*** (2024.01)        ***G01N 23/04*** (2018.01)
***G01N 23/10*** (2018.01)        ***G01N 23/18*** (2018.01)

(52) Cooperative Patent Classification (CPC):
**G01N 23/04; G01N 23/10; G01N 23/18; G06T 5/70**

(86) International application number:
**PCT/JP2023/043532**

(87) International publication number:
**WO 2024/195212 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2023 JP 2023045688**

(71) Applicant: **Hamamatsu Photonics K.K.
Hamamatsu-shi, Shizuoka 435-8558 (JP)**

(72) Inventors:
• **ONISHI, Tatsuya
  Hamamatsu-shi, Shizuoka 435-8558 (JP)**
• **TSUCHIYA, Satoshi
  Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **IMAGE PROCESSING METHOD, IMAGE PROCESSING DEVICE, AND IMAGE PROCESSING PROGRAM**

(57)    An image acquisition device 1 includes a relationship calculation unit 202 that calculates relationship data between pixel values in an image and a statistical value of the pixel values, and a parameter setting unit 204 and a filter processing unit 205 that process an image to be processed. The parameter setting unit 204 and the filter processing unit 205 specify the statistical value for each pixel of the image on the basis of a pixel value for each pixel of the image and the relationship data, set parameters of an edge-preserving smoothing filter for each pixel of the image on the basis of the specified statistical value, and process the image using the edge-preserving smoothing filter in which the parameters are set for each pixel of the image.

**Fig.3**

20 CONTROL DEVICE
201 IMAGE ACQUISITION UNIT
202 RELATIONSHIP CALCULATION UNIT
203 NOISE MAP GENERATION UNIT
204 PARAMETER SETTING UNIT
205 FILTER PROCESSING UNIT
207 IMAGE

EP 4 679 360 A1

## Description

### Technical Field

The present invention relates to an image processing method, an image processing device, and an image processing program.

### Background Art

Since the past, a bilateral filter which is a type of edge-preserving smoothing filter has been used as a filter for removing noise from an image (see, for example, Non-Patent Literature 1 and Non-Patent Literature 2). In order to obtain a good image, parameters of the bilateral filter are adjusted.

### Citation List

### Patent Literature

[Non-Patent Literature 1] Akihiro Yoza and four others, "Determination of Optimal Parameters for Bilateral Filter for Medical Images," published in 2019, IEEJ Transactions on Electronics, Information and Systems, Vol. 139 No. 9, pp. 1008-1014

[Non-Patent Literature 2] Hayato Hashii and three others, "Parameter Tuning of Bilateral Filter Based on Hellinger Distance," 26th Fuzzy System Symposium, Hiroshima, September 13-15, 2010

### Summary of Invention

### Technical Problem

The conventional noise removal technique using an edge-preserving smoothing filter as described above has a tendency to have difficulty in removing noise from an entire image having various luminance distributions. For this reason, there is a need to realize effective noise removal from the entire image.

The present disclosure was contrived in view of such a problem, and an object thereof is to provide an image processing method, an image processing device, and an image processing program that make it possible to effectively realize noise removal from the entire image.

### Solution to Problem

According to a first aspect of an embodiment, there is provided an image processing method including: a calculation step of calculating a relationship between luminance values in an image and a statistical value of the luminance values; an acquisition step of acquiring an image to be processed; a setting step of specifying the statistical value for each pixel of the image on the basis of a luminance value for each pixel of the image and the relationship, and setting parameters of an edge-preserving smoothing filter for each pixel of the image on the basis of the specified statistical value; and a processing step of processing the image using the edge-preserving smoothing filter in which the parameters are set for each pixel of the image.

Alternatively, according to a second aspect of the embodiment, there is provided an image processing device including: a relationship calculation unit configured to calculate a relationship between luminance values in an image and a statistical value of the luminance values; and an image processing unit configured to process an image to be processed, wherein the image processing unit specifies the statistical value for each pixel of the image on the basis of a luminance value for each pixel of the image and the relationship, and sets parameters of an edge-preserving smoothing filter for each pixel of the image on the basis of the specified statistical value, and processes the image using the edge-preserving smoothing filter in which the parameters are set for each pixel of the image.

Alternatively, according to a third aspect of the embodiment, there is provided an image processing program causing a processor to function as: a relationship calculation unit configured to calculate a relationship between luminance values in an image and a statistical value of the luminance values; and an image processing unit configured to process an image to be processed, wherein the image processing unit specifies the statistical value for each pixel of the image on the basis of a luminance value for each pixel of the image and the relationship, and sets parameters of an edge-preserving smoothing filter for each pixel of the image on the basis of the specified statistical value, and processes the image using the edge-preserving smoothing filter in which the parameters are set for each pixel of the image.

According to any of the first to third aspects, parameters appropriate to the luminance value are set for each pixel of an image, and an image to be processed is processed using an edge-preserving smoothing filter in which the set parameters for each pixel are reflected. This allows a noise removal process corresponding to the statistical value of the luminance values of each pixel of the image to be performed. As a result, it is possible to effectively remove noise from the entire image.

**Advantageous Effects of Invention**

According to any aspect of the present embodiment, it is possible to effectively realize noise removal from the entire image.

**Brief Description of Drawings**

FIG. 1 is a configuration diagram an image acquisition device 1 which is an image processing device according to a first embodiment.
FIG. 2 is a diagram illustrating a hardware configuration of a control device in FIG. 1.
FIG. 3 is a block diagram illustrating a functional configuration of the control device in FIG. 1.
FIG. 4 is a diagram illustrating an example of an X-ray image acquired by an image acquisition unit in FIG. 3.
FIG. 5 is a flowchart illustrating a procedure of an observation process performed by the image acquisition device 1.
FIG. 6 is a diagram illustrating an example of an X-ray image acquired by the image acquisition device 1 according to the first embodiment.
FIG. 7 is a diagram illustrating an example of an X-ray image acquired by the image acquisition device 1 according to the first embodiment.
FIG. 8 is a block diagram illustrating a functional configuration of an optical image processing system 1A which is an image processing device according to a second embodiment.
FIG. 9 is a diagram illustrating an example of an optical image G1 acquired by an image acquisition unit in FIG. 8.
FIG. 10 is a flowchart illustrating a procedure of an observation process performed by the optical image processing system 1A.

**Description of Embodiments**

Hereinafter, embodiments of the present invention will be described in detail with reference to the accompanying drawings. Meanwhile, in each drawing, the same or equivalent parts are denoted by the same reference numerals, and thus duplicate description will be omitted.

[First embodiment]

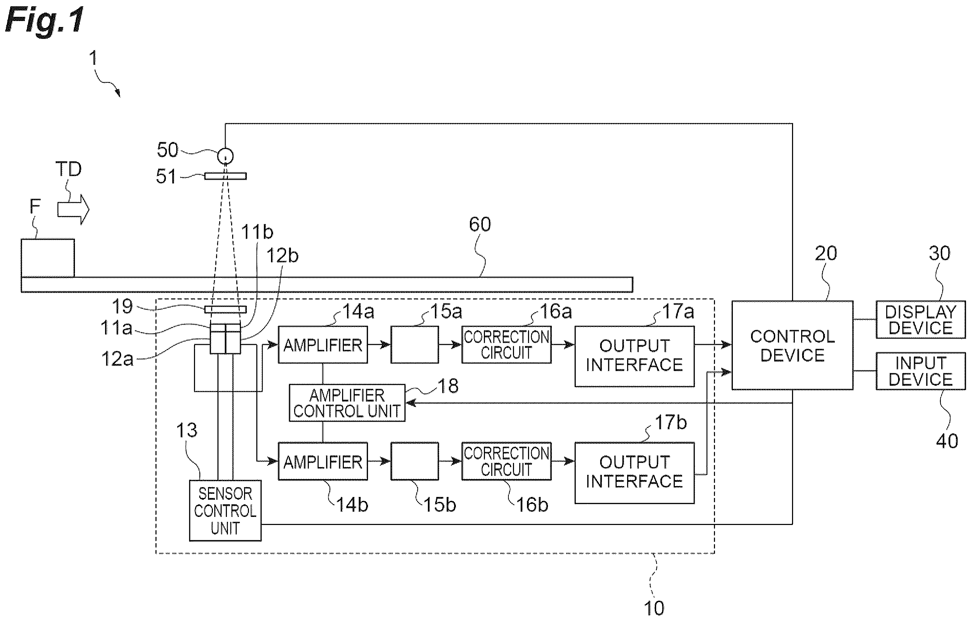

FIG. 1 is a configuration diagram of an image acquisition device 1 which is an image processing device according to a first embodiment. As shown in FIG. 1, the image acquisition device 1 is a device that irradiates a subject F transported in a transport direction TD with X-rays (energy beam, radiation) and acquires an X-ray image (radiographic image) obtained by capturing an image of the subject F on the basis of the X-rays transmitted through the subject F. The image acquisition device 1 performs a foreign substance inspection, a weight inspection, a product inspection, or the like on the subject F using an X-ray image, and examples of the application include a food inspection, a baggage inspection, a substrate inspection, a battery inspection, a material inspection, and the like. The image acquisition device 1 is configured to include a belt conveyor (transport means) 60, an X-ray irradiator (source) 50, an X-ray detection camera (imaging device, detection unit) 10, a control device 20, a display device 30, and an input device (input unit) 40 for performing various inputs. Meanwhile, in the embodiment of the present disclosure, the image need only be an image obtained by capturing an image of an energy beam transmitted through the subject F. The energy beam may be, for example, radiation such as X-rays and $\gamma$-rays, or may be any of visible light, infrared rays, ultraviolet rays, and electron beams. In the present embodiment, the image is a radiographic image such as an X-ray image, but may be any other image.

The belt conveyor 60 has a belt portion on which the subject F is placed, and transports the subject F in the transport direction TD at a predetermined transport speed by moving the belt portion in the transport direction TD. The transport speed of the subject F is, for example, 48 m/min. The belt conveyor 60 can change the transport speed as necessary to a transport speed such as, for example, 24 m/min or 96 m/min. In addition, the belt conveyor 60 can appropriately change the height position of the belt portion to change a distance between the X-ray irradiator 50 and the subject F. Meanwhile, examples of the subject F transported by the belt conveyor 60 include foodstuffs such as meat, seafood, agricultural products, or confectionery, rubber products such as tires, resin products, metal products, resource materials such as minerals, waste, and various products such as electronic parts or electronic substrates. The X-ray irradiator 50 is a device that radiates (outputs) X-rays to the subject F as an X-ray source. The X-ray irradiator 50 is a point light source, and diffuses and radiates the X-rays in a predetermined angle range in a fixed irradiation direction. The X-ray irradiator 50 is disposed above the belt conveyor 60 at a predetermined distance from the belt conveyor 60 so that the irradiation direction of the X-rays is directed toward the belt conveyor 60 and the diffused X-rays extend in the entire width direction of the subject F (a direction intersecting the transport direction TD). In addition, in the lengthwise direction of the subject F (a direction parallel to the transport direction TD), the irradiation range of the X-ray irradiator 50 is set as a predetermined division range in the lengthwise direction, and the X-rays are radiated in the entire lengthwise direction of the subject F by the subject F being transported in the transport direction TD by the belt conveyor 60. The tube voltage and tube current of the X-ray irradiator 50 are set by the control device 20. The X-ray irradiator 50 irradiates the belt conveyor 60 with X-rays having a predetermined energy and radiation dose according to the set tube voltage and tube current. In addition, a filter 51 that transmits a predetermined wavelength region of the X-rays is provided in the vicinity of the X-ray irradiator 50 on the belt conveyor 60 side. The filter 51 is not necessarily required and may be omitted as appropriate.

The X-ray detection camera 10 detects X-rays passing through the subject F among the X-rays radiated to the subject F by the X-ray irradiator 50, and outputs an image-detected signal based on the X-rays. The X-ray detection camera 10 is a dual-line X-ray camera in which two sets of configurations for detecting X-rays are disposed. In the image acquisition device 1 according to the present embodiment, each X-ray image is generated (detected) on the basis of the X-rays detected in each line (a first line and a second line) of the dual-line X-ray camera. By performing an averaging process, an addition process, or the like on the two generated X-ray images, a clear (high-luminance) image can be acquired with a smaller X-ray dose than in a case where an X-ray image is generated on the basis of the X-rays detected in one line. Meanwhile, the X-ray detection camera 10 may have a configuration of a single-line X-ray camera in which one set of configurations for detecting X-rays is disposed, a multi-line X-ray camera in which two or more sets of configurations for detecting X-rays are disposed, or two or more single-line X-ray cameras.

The X-ray detection camera 10 includes a filter 19, scintillators 11a and 11b, line scan cameras 12a and 12b, a sensor control unit 13, amplifiers 14a and 14b, AD converters 15a and 15b, correction circuits 16a and 16b, output interfaces 17a and 17b, and an amplifier control unit 18. The scintillator 11a, the line scan camera 12a, the amplifier 14a, the AD converter 15a, the correction circuit 16a, and the output interface 17a are electrically connected to each other, and have components related to the first line. In addition, the scintillator 11b, the line scan camera 12b, the amplifier 14b, the AD converter 15b, the correction circuit 16b, and the output interface 17b are electrically connected to each other, and have components related to the second line. The line scan camera 12a of the first line and the line scan camera 12b of the second line are disposed side by side in the transport direction TD. Meanwhile, hereinafter, the components of the first line will be described to represent components common to the first line and the second line.

The scintillator 11a is fixed on the line scan camera 12a by adhesion or the like, and converts the X-rays passing through the subject F into scintillation light. The scintillator 11a outputs the scintillation light to the line scan camera 12a. The filter 19 transmits a predetermined wavelength region of the X-rays toward the scintillator 11a. The filter 19 is not necessarily required and may be omitted as appropriate.

The line scan camera 12a detects the scintillation light from the scintillator 11a, converts the detected light into electric charge, and outputs it as a detection signal (electrical signal) to the amplifier 14a. The line scan camera 12a has a plurality of line sensors arranged in parallel in a direction intersecting the transport direction TD. The line sensor is, for example, a charge coupled device (CCD) image sensor, a complementary metal-oxide semiconductor (CMOS) image sensor, or the like, and includes a plurality of photodiodes.

The sensor control unit 13 controls the line scan cameras 12a and 12b to repeatedly capture images at a predetermined detection period so that the line scan cameras 12a and 12b can capture an image of X-rays passing through the same region of the subject F. As the predetermined detection period, for example, a period common to the line scan cameras 12a and 12b may be set on the basis of the distance between the line scan cameras 12a and 12b, the speed of the belt conveyor 60, the distance between the X-ray irradiator 50 and the subject F on the belt conveyor 60 (focus object distance (FOD)), and the distance between the X-ray irradiator 50 and the line scan cameras 12a and 12b (focus detector distance (FDD)). In addition, the predetermined period may be individually set on the basis of the pixel width of a photodiode in a direction perpendicular to the arrangement direction of pixels of the line sensors of the line scan cameras 12a and 12b. In this case, the deviation (delay time) of the detection period between the line scan cameras 12a and 12b may be specified in accordance with the distance between the line scan cameras 12a and 12b, the speed of the belt conveyor 60, the distance between the X-ray irradiator 50 and the subject F on the belt conveyor 60 (FOD), and the distance between the X-ray irradiator 50 and the line scan cameras 12a and 12b (FDD), and individual periods may be set for each. The amplifier 14a amplifies the detection signal at a predetermined set amplification factor to generate an amplified signal, and outputs the amplified signal to the AD converter 15a. The set amplification factor is an amplification factor which is set by the amplifier control unit 18. The amplifier control unit 18 sets the set amplification factor of the amplifiers 14a and 14b on the basis of predetermined imaging conditions.

The AD converter 15a converts the amplified signal (voltage signal) output by the amplifier 14a into a digital signal, and outputs the converted signal to the correction circuit 16a. The correction circuit 16a performs a predetermined correction such as signal amplification on the digital signal, and outputs the corrected digital signal to the output interface 17a. The output interface 17a outputs the digital signal to the outside of the X-ray detection camera 10. In FIG. 1, the AD converter, the correction circuit, and the output interface exist individually, but they may be integrated into one.

The control device 20 is a computer such as, for example, a personal computer (PC). The control device 20 generates an X-ray image on the basis of the digital signal (amplified signal) output from the X-ray detection camera 10 (more specifically, the output interfaces 17a and 17b). The control device 20 generates one X-ray image by performing an averaging process or an addition process on two digital signals output from the output interfaces 17a and 17b. The generated X-ray image is output to the display device 30 after a noise removal process to be described later has been performed, as an image to be processed, and is displayed by the display device 30. In addition, the control device 20 controls the X-ray irradiator 50, the amplifier control unit 18, and the sensor control unit 13. Meanwhile, the control device 20 of the present embodiment is a device which is independently provided outside the X-ray detection camera 10, but it may be integrated inside the X-ray detection camera 10.

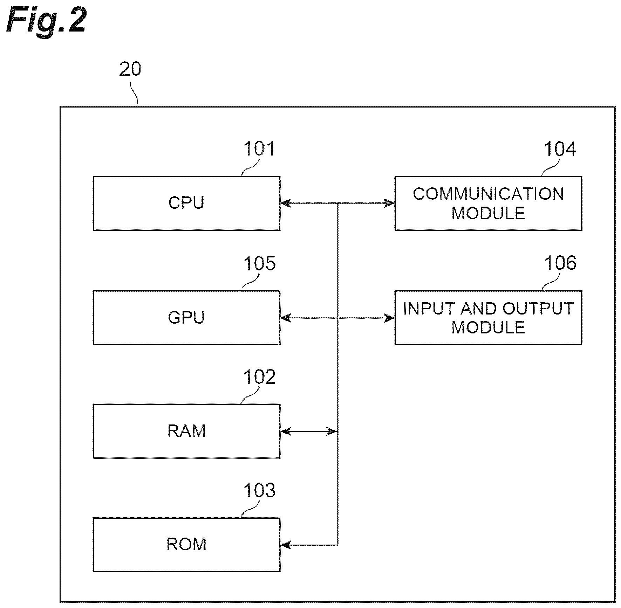

FIG. 2 shows a hardware configuration of the control device 20. As shown in FIG. 2, the control device 20 is a computer or the like physically including a central processing unit (CPU) 101 and graphic processing unit (GPU) 105 which are processors, a random access memory (RAM) 102 and a read only memory (ROM) 103 which are recording media, a communication module 104, an input and output module 106, and the like, which are electrically connected to each other. Meanwhile, the control device 20 may include a display, a keyboard, a mouse, a touch panel display, and the like as the input device 40 and the display device 30, or may include a data recording device such as a hard disk drive and a semiconductor memory. In addition, the control device 20 may be constituted by a plurality of computers.

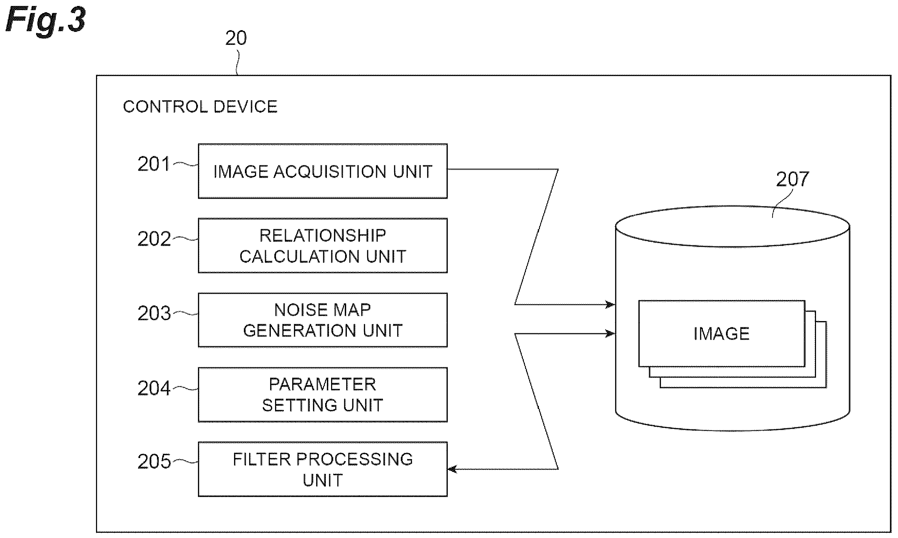

FIG. 3 is a block diagram illustrating a functional configuration of a control device 20. The control device 20 includes an image acquisition unit 201, a relationship calculation unit 202, a noise map generation unit 203, a parameter setting unit (image processing unit) 204, a filter processing unit (image processing unit) 205, and an image storage unit 207. Each functional unit of the control device 20 shown in FIG. 3 is realized by loading a program (an image processing program of the present embodiment) on the hardware such as the CPU 101, the GPU 105, and the RAM 102 to thereby bring the communication module 104, the input and output module 106, and the like into operation under the control of the CPU 101 and the GPU 105 and read out and write data in the RAM 102. The CPU 101 and the GPU 105 of the control device 20 cause the control device 20 to function as each functional unit in FIG. 3 by executing this computer program, and sequentially execute processing corresponding to an image processing method to be described later. Meanwhile, the CPU 101 and the GPU 105 may be a single piece of hardware, or only one may be used. In addition, the CPU 101 and the GPU 105 may be implemented as a soft processor in a programmable logic such as an FPGA. The RAM or the ROM may also be a single piece of hardware, or may be built into a programmable logic such as an FPGA. Various types of data required for executing this computer program and various types of data generated by executing this computer program are all stored in a built-in memory such as the ROM 103 or the RAM 102, or a storage medium such as a hard disk drive or a solid-state drive.

The details of the function of each functional unit of the control device 20 will be described below.

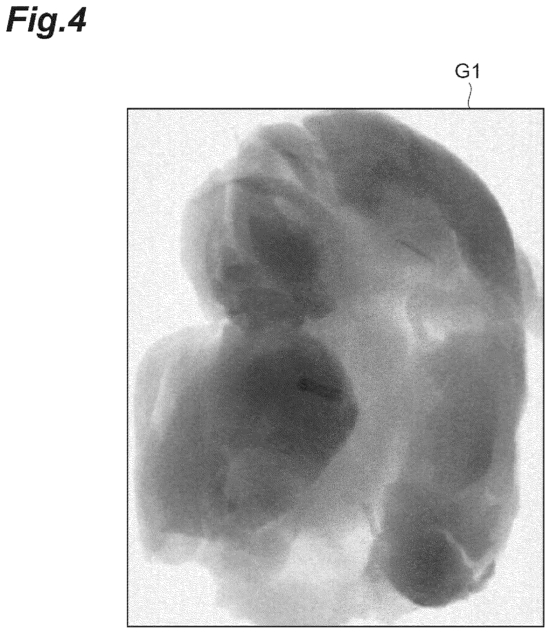

The image acquisition unit 201 acquires an image obtained by irradiating the subject F with an energy beam and capturing an image of the energy beam transmitted through the subject F. Specifically, the image acquisition unit 201 generates an X-ray image on the basis of the digital signal (amplified signal) output from the X-ray detection camera 10 (more specifically, the output interfaces 17a and 17b). The image acquisition unit 201 generates one X-ray image by performing an averaging process or an addition process on two digital signals output from the output interfaces 17a and 17b, and stores the generated X-ray image in the image storage unit 207. FIG. 4 is a diagram illustrating an example of an X-ray image G1 acquired by the image acquisition unit 201.

The relationship calculation unit 202 calculates a relationship between a luminance value (hereinafter also referred to as a pixel value) in the X-ray image acquired by the image acquisition unit 201 and a statistical value of the luminance values as follows. In the present embodiment, a noise evaluation value obtained by evaluating the spread of noise values, that is, a noise sigma value which is the standard deviation of pixel values is used as the statistical value of pixel values. In addition, the variance of pixel values may be used as the statistical value of pixel values.

That is, the relationship calculation unit 202 calculates first relationship data indicating a relationship between the pixel value and the standard deviation of the pixel values through a simulation. The relational expression between the pixel value and the standard deviation of the pixel values used in the simulation by the relationship calculation unit 202 is expressed by the following Formulas (1) to (4).

[Formula 1]

$$Noise$$

$$= \sqrt{\left(FE_mMCQ\sqrt{\frac{cf}{E_mMCQ + E_mM_{Si}rate_{si}}} \cdot (Signal * C_s - offset)\right)^2 + \left(E_mM_{Si}\sqrt{rate_{si}\frac{cf}{E_mMCQ + E_mM_{Si}rate_{si}}} \cdot (Signal * C_s - offset)\right)^2 + (R)^2} \Bigg/ \sqrt{N} \Bigg/ cf/coeff_{noise} \quad (1)$$

$$F = \sqrt{F_p{}^2 + \frac{1}{MCQ}} \quad (2)$$

$$M = Mcoeff_M \quad (3)$$

$$F_p = F_pcoeff_{Fp} \quad (4)$$

In Formulas (1) to (3), the variable Noise is information indicating the standard deviation of the pixel values, the variable Signal is information indicating the signal value (pixel value) of a pixel, the constant F is information indicating the noise factor, the variable $E_m$ is information indicating the average energy of the X-rays, the constant M is information indicating the multiplication factor by the scintillator, the constant $coeff_M$ is information indicating a multiplication factor adjustment coefficient for adjusting the multiplication factor by the scintillator, the constant C is information indicating the coupling efficiency between the line scan camera 12a and the scintillator 11a, or between the line scan camera 12b and the scintillator 11b in the X-ray detection camera 10, and the constant Q is information indicating the quantum efficiency of the line scan camera 12a or the line scan camera 12b.

In Formula (1), the constant cf is information indicating a conversion coefficient for converting the signal value of a pixel into an electric charge in the line scan camera 12a or the line scan camera 12b, and the constant R is information indicating readout noise in the line scan camera 12a or the line scan camera 12b. The conversion coefficient cf and the readout noise R are determined by the gain settings in the line scan camera 12a or the line scan camera 12b.

In Formula (1), the constant $M_{Si}$ is information indicating the multiplication factor of a line scan camera (silicon) when X-rays incident on the scintillator 11a or the scintillator 11b are incident on the line scan camera 12a or the line scan camera 12b without being converted into visible light, the constant $rate_{si}$ is information indicating the silicon direct occurrence rate indicating the probability that X-rays incident on the scintillator 11a or the scintillator 11b are incident on the line scan camera 12a or the line scan camera 12b without being converted into visible light, the constant $C_S$ is information indicating a shading correction value, and the constant offset is information indicating a camera offset indicating the offset value of the line scan cameras 12a and 12b. In Formula (1), the constant N is information indicating the number of sensors. The constant N may be, for example, information indicating the number of line scan cameras (the number of lines), or may be information indicating the binning setting in the line scan camera 12a or the line scan camera 12b. In Formula (1), $coeff_{noise}$ is a noise adjustment coefficient for adjusting noise. In Formulas (2) and (4), the constant $F_p$ is information indicating a blur coefficient indicating blur, and the constant $coeff_{Fp}$ is information indicating a blur coefficient adjustment coefficient for adjusting the coefficient indicating blur.

Here, when Formulas (1) to (4) are used, the relationship calculation unit 202 substitutes the pixel value of each pixel of the X-ray image acquired by the image acquisition unit 201 for the variable Signal, and sets other parameters in Formulas (1) to (4) on the basis of information input by a user through the input device 40. The relationship calculation unit 202 then acquires the variable Noise calculated using Formulas (1) to (4) as the numerical value of the standard deviation of the pixel values of each pixel in the X-ray image. Meanwhile, the parameters in Formulas (1) to (4) may be set on the basis of information accepted from a user, or may be set by reading out data stored in the RAM 102, the ROM 103, or the like within the control device 20 on the basis of the accepted information.

For example, the relationship calculation unit 202 accepts input of the following information from the user.

· Measurement camera model
· Gain setting
· Number of binnings, number of lines
· X-ray average energy $E_m$

· Camera offset offset
· Silicon direct occurrence rate $rate_{si}$
· Shading correction value $C_S$
· Noise adjustment coefficient $coeff_{noise}$
· Multiplication factor adjustment coefficient $coeff_M$ · Blur coefficient adjustment coefficient $coeff_{Fp}$

The relationship calculation unit 202 reads out parameters such as the scintillator multiplication factor M, the coupling efficiency C, the blur coefficient $F_p$, and the quantum efficiency Q which are stored in association with the "measurement camera model" from within the control device 20 on the basis of the accepted information "measurement camera model." For example, in a case where the "measurement camera model" is "camera 1," the relationship calculation unit 202 reads out the parameters of the scintillator multiplication factor M = 10, the coupling efficiency C = 0.7, the blur coefficient $F_p$ = 0.9, and the quantum efficiency Q = 0.9 which are associated with "camera 1," and in a case where the "measurement camera model" is "camera 2," the relationship calculation unit reads out the parameters of the scintillator multiplication factor M = 100, the coupling efficiency C = 0.8, the blur coefficient $F_p$ = 0.8, and the quantum efficiency Q = 0.7 which are associated with "camera 2." In the same way, the relationship calculation unit 202 reads out parameters such as the conversion coefficient cf and the readout noise R which are stored in association with the "gain setting" from within the control device 20 on the basis of the accepted information "gain setting," and reads out parameters such as the number of sensors N which are stored in association with "number of binnings, number of lines" from within the control device 20 on the basis of the accepted information "number of binnings, number of lines." Further, the relationship calculation unit 202 sets other parameters such as the X-ray average energy $E_m$ on the basis of information accepted from a user.

Meanwhile, the relationship calculation unit 202 may set some of the other parameters in Formulas (1) to (4) by calculating them on the basis of the information accepted from the user. For example, the relationship calculation unit 202 can acquire the average energy $E_m$ through calculation. As an example, the relationship calculation unit 202 calculates the average energy related to the X-rays (radiation) transmitted through the subject F on the basis of condition information input by the user. The condition information is information indicating either the conditions of the source of the energy beam or the imaging conditions when the energy beam is radiated to capture an image of the subject F. Meanwhile, the relationship calculation unit 202 may accept an input of the condition information as a direct input of information such as numerical values, or may accept the input as a selective input for information such as numerical values which are set in an internal memory in advance. The relationship calculation unit 202 may accept the input of the above condition information from the user, and acquire some condition information (such as a tube voltage) in accordance with the detection result of the state of control performed by the control device 20.

The condition information is, for example, information indicating the operating conditions of the X-ray irradiator (source) 50 when the X-ray image of the subject F is captured, the imaging conditions of the X-ray detection camera 10, or the like. Examples of the operating conditions include all or some of the type of X-ray source, a tube voltage, a tube current, a target angle, a target material, and the like. Examples of the condition information indicating the imaging conditions include all or some of the following: the material, thickness, and density of the filters 51 and 19 disposed between the X-ray irradiator 50 and the X-ray detection camera 10, the distance (FDD) between the X-ray irradiator 50 and the X-ray detection camera 10, the type and thickness of window material of the X-ray detection camera 10, information relating to the scintillators 11a and 11b of the X-ray detection camera 10 (for example, thickness, material, density, multiplication factor, surface reflectance, diffusion coefficient, or absorption coefficient), X-ray detection camera information (for example, a gain setting value, a circuit noise value, an amount of saturated charge, a conversion coefficient value (e-/count), or the line rate (Hz) or line speed (m/min) of the camera), information on the subject F (measured substance, thickness, or density), and the like.

For example, the relationship calculation unit 202 calculates the spectrum of X-rays detected by the X-ray detection camera 10 using, a known Tucker approximation or the like on the basis of information included in the condition information, such as a tube voltage, a target angle, a target material, the material and thickness of the filters 51 and 19, the presence or absence of the filters, the type of window material of the X-ray detection camera 10, the presence or absence of the window material, and the material and thickness of the scintillators 11a and 11b of the X-ray detection camera 10. The relationship calculation unit 202 further calculates a spectral intensity integration value and a photon number integration value from the spectrum of the X-rays, and calculates the value of the average energy of the X-rays by dividing the spectral intensity integration value by the photon number integration value. Meanwhile, for the calculation of the X-ray spectrum, a known Kramers or Birch et al. approximation or the like may be used.

In addition, the relationship calculation unit 202 may derive the first relationship data indicating the relationship between the pixel value and the standard deviation of the pixel values on the basis of an image obtained by actual image capturing. As an example, the relationship calculation unit 202 may acquire an X-ray image (test image) captured by irradiating a jig with X-rays. As the jig, a flat plate-like member or the like of which the thickness and material are known is used. The relationship calculation unit 202 may derive relationship data indicating the relationship between the pixel value and the standard deviation of the pixel values from the acquired test image.

The derivation by the relationship calculation unit 202 of the first relationship data indicating the relationship between the pixel value and the standard deviation of the pixel values from the X-ray image obtained by capturing an image of the jig will be described. For the jig, for example, a member of which the thickness changes stepwise in one direction can be used. First, in the test image obtained by capturing an image of the jig, the relationship calculation unit 202 derives a pixel value in a case where there is no noise for each step of the jig (hereinafter referred to as a true pixel value), and derives the standard deviation of the pixel values on the basis of the true pixel value. Specifically, the relationship calculation unit 202 derives the average value of the pixel values at a certain step of the jig. The relationship calculation unit 202 then uses the derived average value of the pixel values as the true pixel value at that step. In that step, the relationship calculation unit 202 derives the difference between each pixel value and the true pixel value as a noise value. The relationship calculation unit 202 derives the standard deviation of the pixel values from the derived noise value for each pixel value.

The relationship calculation unit 202 then derives the first relationship data on the basis of the relationship between the true pixel value and standard deviation of the pixel values. Specifically, the relationship calculation unit 202 derives the true pixel value and the standard deviation of the pixel values for each step of the jig. The relationship calculation unit 202 plots the relationship between the derived true pixel value and the standard deviation of the pixel values on a graph and draws an approximation curve to derive a relationship graph indicating the relationship between the pixel value and the standard deviation of the pixel values. Meanwhile, for the approximation curve, exponential approximation, linear approximation, log approximation, polynomial approximation, power approximation, or the like is used.

The relationship calculation unit 202 may use a plurality of X-ray images captured with varying luminance in a state where there is no subject, instead of the X-ray image obtained by capturing an image of a jig as the test image. In this case, a plurality of test images obtained while changing the output intensity of the X-ray irradiator 50 or a plurality of test images obtained while changing the exposure time in the X-ray detection camera 10 are used. The relationship calculation unit 202 can derive a relationship graph indicating the relationship between the pixel value and the standard deviation of the pixel values in the same way as the procedure described above.

The noise map generation unit 203 specifies the value of the standard deviation from the pixel value for each pixel of the X-ray image on the basis of the first relationship data indicating the relationship between the pixel value of each pixel of the X-ray image and the standard deviation of the pixel values calculated by the relationship calculation unit 202. The noise map generation unit 203 generates a noise map which is data in which the derived standard deviation is associated with each pixel of the X-ray image.

The parameter setting unit 204 sets parameters to be used in the edge-preserving smoothing filter for each pixel on the basis of the noise map generated by the noise map generation unit 203. In the present embodiment, a bilateral filter is used as the edge-preserving smoothing filter. That is, the parameter setting unit 204 calculates $2 \times \sigma^2$ for each pixel from the value $\sigma$ of the standard deviation associated with each pixel on the noise map, and generates a parameter map which is data in which the calculated value $2 \times \sigma^2$ for each pixel is associated with each pixel.

The filter processing unit 205 processes the X-ray image stored in the image storage unit 207 to execute the noise removal process using the bilateral filter in which parameters calculated for each pixel are set by the parameter setting unit 204. Specifically, in a case where the position of each pixel in the X-ray image which is a two-dimensional image is represented by (i, j) (i, j: natural numbers), the pixel value of each pixel in the X-ray image to be processed is represented by f(i, j), the pixel value of each pixel in the X-ray image to be output is represented by g(i, j), the control parameter in the spatial direction is represented by $\sigma_1$ and the control parameter in the luminance direction is represented by $\sigma_2$, the filter processing unit 205 executes the noise removal process using the bilateral filter by calculating the following Formula (5) for all pixels of the X-ray image.

[Formula 2]

$$g(i,j)$$
$$= \frac{\sum_{m=-w}^{w} \sum_{n=-w}^{w} f(i+m, j+n) \, exp\left(-\frac{m^2+n^2}{2\sigma_1^2}\right) exp\left(-\frac{(f(i,j)-f(i+m,j+n))^2}{2\sigma(i,j)_2^2}\right)}{\sum_{m=-w}^{w} \sum_{n=-w}^{w} exp\left(-\frac{m^2+n^2}{2\sigma_1^2}\right) exp\left(-\frac{(f(i,j)-f(i+m,j+n))^2}{2\sigma(i,j)_2^2}\right)} \quad (5)$$

In this case, when the pixel value g(i, j) of each pixel is calculated, the filter processing unit 205 refers to the parameter map generated by the parameter setting unit 204, substitutes the parameter $2 \times \sigma 2$ associated with each pixel on the parameter map for the parameter in Formula (5), and sets a parameter commonly set in advance to the control parameter $\sigma 1$ in the spatial direction in Formula (5), thereby calculating the pixel value.

## [Formula 3]

$$2\sigma(i,j)_2^2$$

The filter processing unit 205 stores the X-ray image that has undergone the noise removal process as described above in the image storage unit 207. In this case, the filter processing unit 205 may display the X-ray image that has undergone the noise removal process on the display device 30, or may operate to transmit the image to an external device.

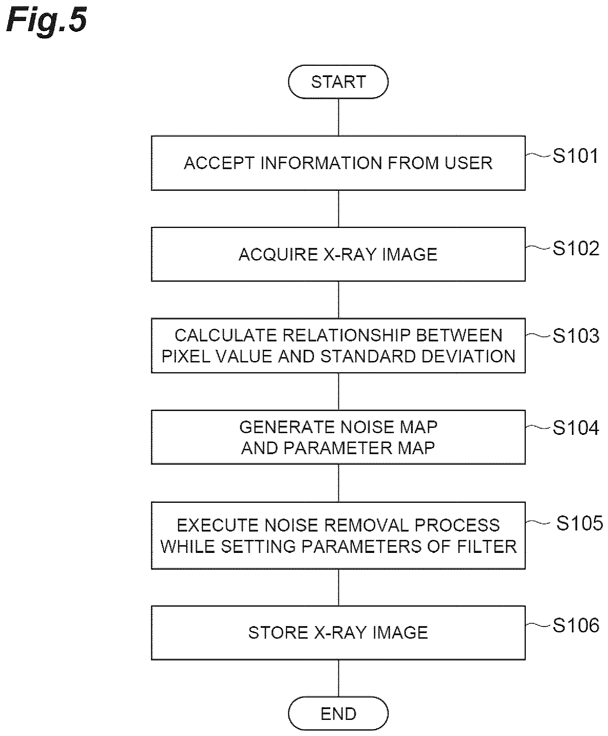

Next, a procedure of an observation process of an energy beam transmission image of the subject F using the image acquisition device 1 according to the present embodiment, that is, a flow of an image processing method according to the present embodiment, will be described. FIG. 5 is a flowchart illustrating a procedure of an observation process performed by the image acquisition device 1.

First, in the control device 20, information for parameter setting is accepted from a user through the input device 40 (step S101, input step). Next, the subject F is set in the image acquisition device 1 to capture an image of the subject F, and an X-ray image of the subject F is acquired by the control device 20 (step S102, acquisition step). Next, the first relationship data indicating the relationship between the pixel value and the standard deviation is calculated by the control device 20 on the basis of the information accepted in step S101 (step S103: calculation step).

Next, a noise map and a parameter map are generated by the control device 20 on the basis of the X-ray image and the first relationship data acquired in step S102 (step S104: setting step). Further, while the parameters of the bilateral filter are set for each pixel by the control device 20 on the basis of the parameter map, the noise removal process is executed on the X-ray image using the set bilateral filter (step S105: processing step). Finally, the X-ray image that has undergone the noise removal process is stored by the control device 20 (step S106).

In the image acquisition device 1 according to the first embodiment described above, a control parameter appropriate to the luminance value is set for each pixel of the X-ray image, and the X-ray image to be processed is processed using the edge-preserving smoothing filter in which the set control parameter for each pixel is reflected. This allows a noise removal process corresponding to the standard deviation of the luminance values of each pixel in the X-ray image to be performed. As a result, it is possible to effectively remove noise in the entire image while preserving the edges of the image.

Since the past, it has been known that the bilateral filter which is an edge-preserving smoothing filter is effective in removing Gaussian noise. The bilateral filter is a filter for applying a weighted Gaussian filter to each local region. In the present embodiment, the control parameter $\sigma_2$ in the luminance direction of the bilateral filter is set for each pixel in accordance with the standard deviation of the pixel values, thereby making it possible to optimize the value of the weight for each local region.

In the present embodiment, the first relationship data is calculated by simulation calculation. This makes it possible to set appropriate parameters for each pixel of the X-ray image and to appropriately remove noise from the entire image.

In addition, in the present embodiment, the first relationship data is calculated on the basis of information input by a user. This makes it possible to set appropriate parameters for each pixel of the X-ray image using the input information and to appropriately remove noise from the entire image.

In addition, in the present embodiment, the first relationship data is also calculated on the basis of the acquired test image. According to such a process, it is possible to set appropriate parameters for each pixel of the X-ray image by analyzing the test image and to appropriately remove noise from the entire image.

In addition, in the present embodiment, the bilateral filter is used as an edge-preserving smoothing filter. In this case, the control parameter in the luminance direction is set on the basis of the standard deviation of the pixel values for each pixel, thereby making it possible to appropriately remove noise from the entire image.

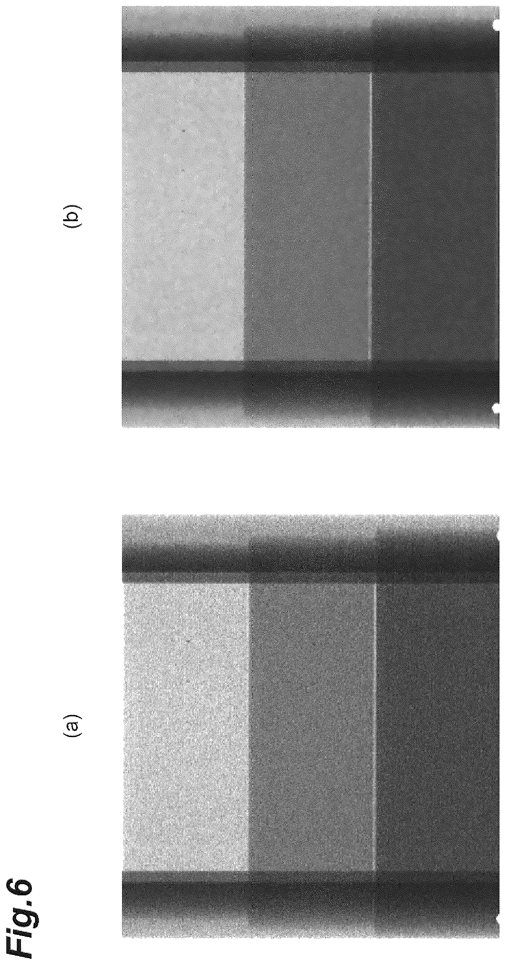

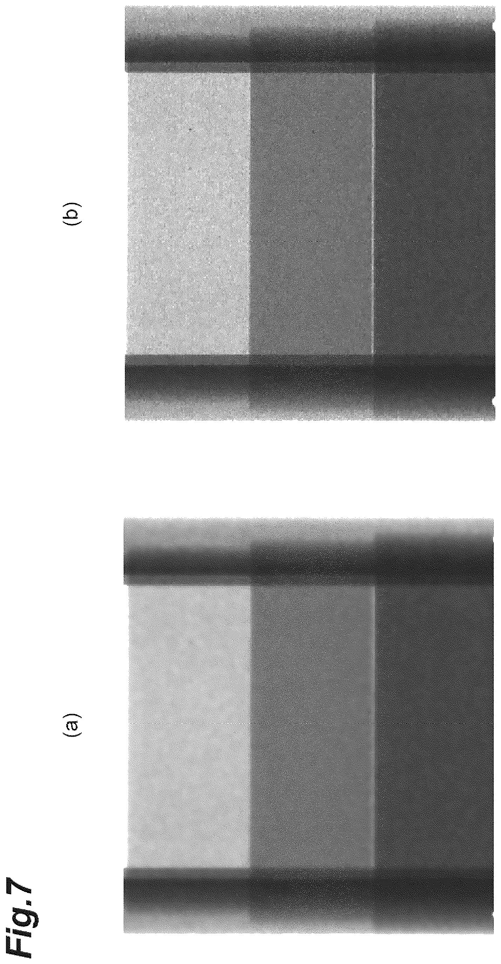

FIGS. 6 and 7 show X-ray images acquired by the image acquisition device 1 with respect to the subject F of which the thickness changes stepwise. In FIG. 6, part (a) shows the X-ray image before the noise removal process, and part (b) shows the X-ray image after the noise removal process. In addition, in FIG. 7, part (a) and part (b) show X-ray images after the noise removal process in a case where the control parameter $\sigma_2$ in the luminance direction is set to a fixed value throughout the X-ray image. These results show that, according to the present embodiment, noise removal is optimized for all thicknesses (part (b) in FIG. 6). On the other hand, in a case where the control parameter $\sigma_2$ was set to a fixed value, the result was that an an image with some parts blurred (part (a) in FIG. 7) or an image in which noise was not sufficiently removed (part (b) in FIG. 7) was obtained.

[Second embodiment]

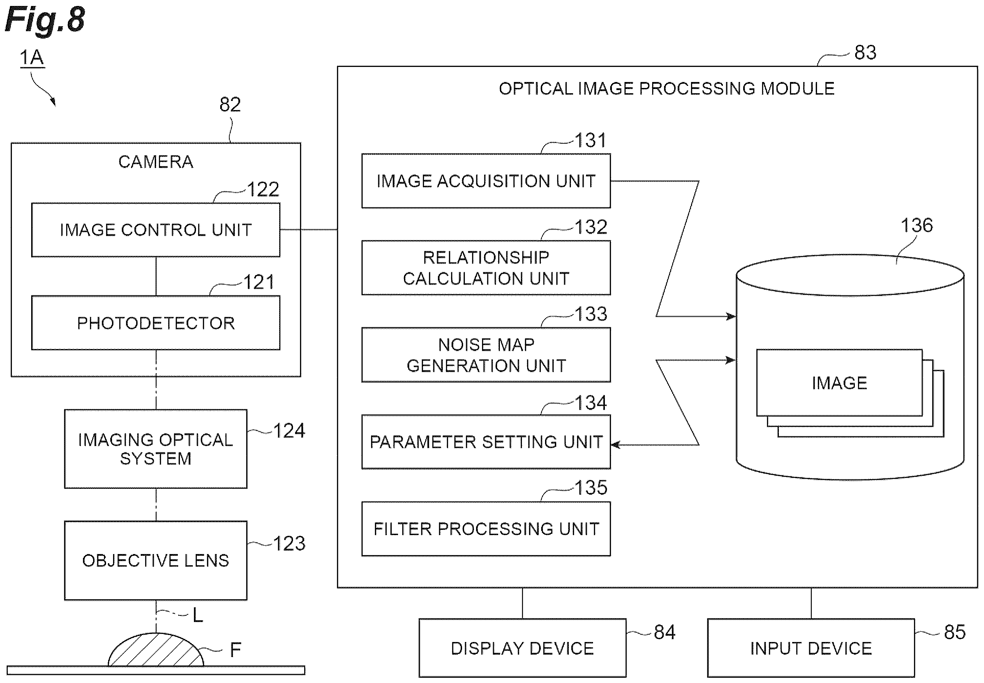

FIG. 8 is a block diagram illustrating a functional configuration of an optical image processing system 1A which is an image processing device according to a second embodiment. As shown in FIG. 8, the optical image processing system 1A is a system that acquires an optical image obtained by capturing an image of the subject F on the basis of light L from the subject F. The light L is, for example, light emitted from the subject F, transmitted light from the subject F, reflected light from the subject F, or scattered light from the subject F. Examples of the light L include ultraviolet rays, visible rays, and infrared rays. Hereinafter, the above light may be referred to as observation light. The optical image processing system 1A includes a camera (imaging device, detection device) 82, an optical image processing module 83, a display device 84, and an input device (input unit) 85.

The camera 82 acquires an optical image by capturing an image of the light L from the subject F. The camera 82 includes a photodetector 121 and an image control unit 122. The photodetector 121 is an imaging element having a plurality of pixels. Examples of the photodetector 121 include a charge coupled device (CCD) image sensor, a complementary metal-oxide semiconductor (CMOS) image sensor, a photodiode, an InGaAs sensor, a time delay integration (TDI)-CCD image sensor, a TDI-CMOS image sensor, an imaging tube, an electron multiplying (EM)-CCD image sensor, an electron bombarded (EB)-CMOS image sensor, a single photon avalanche diode (SPAD, single-pixel photon counter (SPPC)), a multi-pixel photon counter (MPPC, silicon photomultiplier (SiPM)), a hybrid photo detector (HPD), an avalanche photodiode (APD), and a photomultiplier tube (PMT). In addition, the photodetector 121 may be a CCD image sensor, a CMOS image sensor, or the like combined with an image intensifier (I.I) or a micro-channel plate (MCP). Examples of the shapes of the photodetector 121 include an area sensor, a line sensor that acquires an image through line scanning, a TDI sensor, and a point sensor that acquires an image through two-dimensional scanning. The camera 82 captures an image of the light L from the subject F formed by an imaging optical system 124 through an objective lens 123, and outputs a digital signal based on the imaging result to the image control unit 122.

The image control unit 122 executes image processing based on a digital signal from the photodetector 121. The image control unit 122 is constituted by, for example, a central processing unit (CPU), a graphics processing unit (GPU), a field-programmable gate array (FPGA), an application specific integrated circuit (ASIC), a system on a chip (SoC), or the like. The image control unit 122 generates image data on the basis of the digital signal received from the photodetector 121, applies predetermined image processing to the generated image data, and then outputs the data to the optical image processing module 83.

The optical image processing module 83 is a computer such as, for example, a personal computer (PC). The optical image processing module 83 performs image processing on the image data output from the camera 82 to generate an optical image from which noise has been removed. The optical image processing module 83 is connected to each of the camera 82, the display device 84, and the input device (input unit) 85 in a wired or wireless manner so as to communicate with each other. The generated optical image is output to the display device 84 after the noise removal process to be described later is performed, and is displayed by the display device 84. Various types of input information such as imaging conditions of the subject F are input to the optical image processing module 83 from the input device 85 on the basis of a user's operation. In addition, the optical image processing module 83 controls the camera 82. Meanwhile, although the optical image processing module 83 of the second embodiment is a device provided independently outside the camera 82, it may be integrated inside the camera 82. For example, the optical image processing module 83 may be a module equivalent to a processing circuit mounted in a camera such as a CPU or a GPU. The optical image processing module 83 has the hardware configuration as shown in FIG. 2 similarly to the first embodiment.

As shown in FIG. 8, the optical image processing module 83 includes an image acquisition unit 131, a relationship calculation unit 132, a noise map generation unit 133, a parameter setting unit (image processing unit) 134, a filter processing unit (image processing unit) 135, and an image storage unit 136. Each functional unit of the optical image processing module 83 shown in FIG. 8 is realized by loading a program (an image processing program of the second embodiment) onto the hardware such as the CPU 101, the GPU 105, and the RAM 102 (FIG. 2) to thereby bring the communication module 104, the input and output module 106, and the like into operation under the control of the CPU 101 and the GPU 105 and read out and write data in the RAM 102. The CPU 101 and the GPU 105 of the optical image processing module 83 cause the optical image processing module 83 to function as each functional unit shown in FIG. 8 by executing this computer program, and sequentially execute processing corresponding to an image processing method to be described later.

The details of the function of each functional unit of the optical image processing module 83 will be described below.

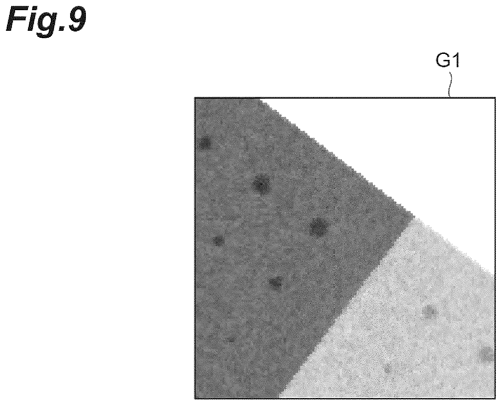

The image acquisition unit 131 acquires an optical image obtained by capturing an image of light from the subject F. Specifically, the image acquisition unit 131 acquires the optical image output from the camera 82. The image acquisition unit 131 then stores the acquired optical image in the image storage unit 136 each time. FIG. 9 is a diagram illustrating an example of an optical image G1 acquired by the image acquisition unit 131.

The relationship calculation unit 132 calculates the relationship between the pixel values in the optical image acquired by the image acquisition unit 131 and the statistical value of the pixel values as follows. In the present embodiment, in the same way as the first embodiment, a noise sigma value which is the standard deviation of the pixel values is also used as the statistical value of the pixel values. First, the relationship calculation unit 132 accepts an input of information from a user using the input device 85. The accepted information includes, for example, information on the type of camera 82, information indicating the gain of the camera 82, and the like. In a case where the information on the type of camera 82 indicates a CMOS, CCD, PD, InGaAs, TDI CCD, TDI CMOS, or a camera that does not perform multiplication, such as an imaging tube, the relationship calculation unit 132 uses the following Formula (6) to calculate the first relationship data indicating the relationship between pixel values and the standard deviation of the pixel values through a simulation.

[Formula 4]

$$Noise = \sqrt{(\sqrt{Cf \cdot Signal})^2 + (\sqrt{D})^2 + R^2} \quad (6)$$

In the above formula, the variable Noise is the standard deviation of pixel values, the variable Signal is the signal value (pixel value) of a pixel, the constant Cf is a conversion coefficient for converting the signal value of a pixel into an electric charge in the camera 82, the constant D is dark current noise in the camera 82, and the constant R is readout noise in the camera 82.

Here, when Formula (6) is used, the relationship calculation unit 132 substitutes the pixel value of each pixel of the optical image acquired by the image acquisition unit 131 for the variable Signal, and sets the other parameters in Formula (6) on the basis of the information of which the input is accepted from a user by the input device 85. The relationship calculation unit 132 then acquires the variable Noise calculated using Formula (6) as the numerical value of the standard deviation of the pixel value of each pixel in the optical image. Meanwhile, the parameters in Formula (6) may be set on the basis of the information accepted from a user, may be set by reading out data stored in the RAM 102, the ROM 103, or the like within the control device 20 on the basis of the accepted information, or may be set in advance as fixed values within the control device 20.

On the other hand, in a case where the information on the type of camera 82 indicates a camera that performs multiplication, such as an EMCCD, a PMT, an MPPC (SiPM), an SSPD, or an APD, the relationship calculation unit 132 uses the following Formula (7) to calculate the first relationship data indicating the relationship between pixel values and the standard deviations of the pixel values through a simulation.

[Formula 5]

$$Noise = \sqrt{(F \cdot G\sqrt{Cf \cdot Signal})^2 + (F \cdot G\sqrt{D})^2 + R^2} \quad (7)$$

In the above formula, the constant F is the noise factor of the camera 82, and G is the gain of the camera 82. In this case, the relationship calculation unit 132 sets the variables and constants in Formula (7) in the same way as above. However, in a case where the information on the type of camera 82 indicates a photon counting-type camera such as a PMT, the relation of the constant R = 0 is set in Formula (7).

On the other hand, in a case where the information on the type of camera 82 indicates a camera that performs avalanche multiplication, such as an MPPC or an APD, the relationship calculation unit 132 uses the following Formula (8) to calculate the first relationship data indicating the relationship between pixel values and the standard deviation of the pixel values through a simulation.

## [Formula 6]

$$Noise = 2q(I_L + I_{dg})BM^2F + 2qI_{ds}B,$$

$$F = Mk + (2 - {}^1\!/\!_M)(1 - k) \quad (8)$$

In the above formula, the constant q is the amount of charge per electron, the constant $I_L$ is a photocurrent when the constant M = 1, the constant $I_{dg}$ is a current generated inside the substrate of the camera 82, the constant B is a bandwidth, the constant M is a multiplication factor, the constant F is an excess noise factor, the constant $I_{ds}$ is a surface leakage current, and the constant k is an ionization rate ratio. In this case, the relationship calculation unit 132 sets the variables and constants in Formula (8) in the same way as above. However, in a case where holes are injected into an avalanche layer in the camera 82, the constant k in Formula (7) is set to 1/k.

In addition, the relationship calculation unit 132 may derive the first relationship data indicating the relationship between the pixel values and the standard deviation of the pixel values on the basis of an image obtained by actual image capturing. As an example, the relationship calculation unit 132 may acquire an optical image (test image) captured by the camera 82 with a jig as a subject. The jig to be used may be a flat plate member or the like of which the concentration is known. The relationship calculation unit 132 may derive relationship data indicating the relationship between pixel values and the standard deviation of the pixel values from the acquired test image.

A description will be given of the derivation of the first relationship data indicating the relationship between pixel values and the standard deviation of the pixel values, performed by the relationship calculation unit 132, from an optical image obtained by capturing an image of the jig. The jig to be used may be, for example, a member of which the concentration changes stepwise in one direction. First, the relationship calculation unit 132 derives pixel values (hereinafter referred to as true pixel values) in a case where there is no noise for each step of the jig in a test image obtained by capturing an image of the jig, and derives the standard deviation of the pixel values on the basis of the true pixel values. Specifically, the relationship calculation unit 132 derives the average value of the pixel values at a certain step of the jig. The relationship calculation unit 132 then sets the derived average value of the pixel values as the true pixel value at that step. In that step, the relationship calculation unit 132 derives the difference between each pixel value and the true pixel value as a noise value. The relationship calculation unit 132 derives the standard deviation of the pixel values from the derived noise value for each pixel value.

The relationship calculation unit 132 then derives the first relationship data on the basis of the relationship between the true pixel value and the standard deviation of the pixel values. Specifically, the relationship calculation unit 132 derives the true pixel value and the standard deviation of the pixel values for each step of the jig. The relationship calculation unit 132 plots the relationship between the derived true pixel value and the standard deviation of the pixel values on a graph and draws an approximation curve to derive a relationship graph indicating the relationship between the pixel value and the standard deviation of the pixel values. Meanwhile, for the approximation curve, exponential approximation, linear approximation, log approximation, polynomial approximation, power approximation, or the like is used.

The relationship calculation unit 132 may use, as the test image, a plurality of optical images captured with varying luminance in a state where there is no subject, instead of an optical image captured with the jig as a subject. In this case, a plurality of test images obtained while changing the illumination intensity in the detection range of the camera 82 or a plurality of test images obtained while changing the exposure time in the camera 82 are used. The relationship calculation unit 132 can derive a relationship graph indicating the relationship between pixel values and the standard deviation of the pixel values in the same way as the procedure described above.

The noise map generation unit 133 generates a noise map on the basis of the first relationship data calculated by the relationship calculation unit 132 and the optical image in the same way as the noise map generation unit 203 in the first embodiment. The parameter setting unit 134 generates a parameter map on the basis of the noise map generated by the noise map generation unit 133 in the same way as the parameter setting unit 204 in the first embodiment. The filter processing unit 135 executes the noise removal process on the optical image using a bilateral filter in which parameters are set for each pixel on the parameter map generated by the parameter setting unit 134, in the same way as the filter processing unit 205 in the first embodiment.

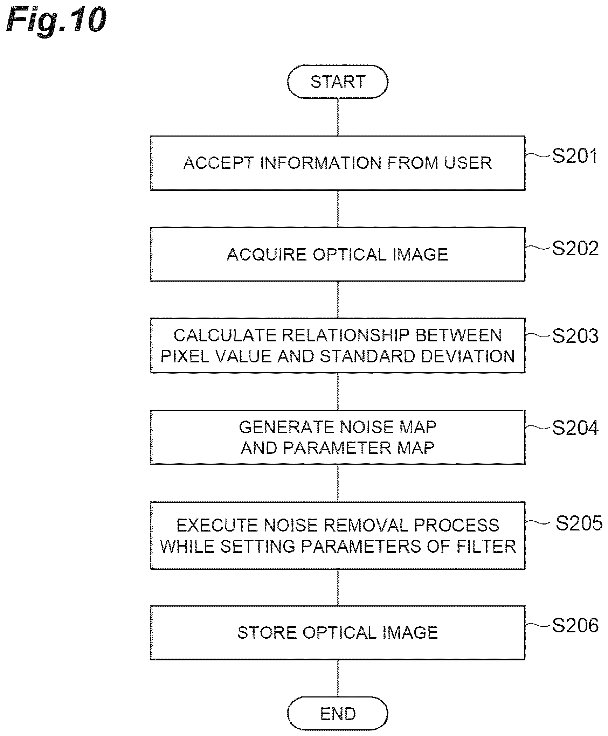

Next, a procedure of an observation process of the optical image of the subject F using the optical image processing system 1A according to the present embodiment, that is, a flow of an image processing method according to the present embodiment will be described. FIG. 10 is a flowchart illustrating a procedure of an observation process performed by the optical image processing system 1A.

First, in the optical image processing module 83, information for parameter setting is accepted from a user through the input device 85 (step S201, input step). Next, the subject F is set in the optical image processing system 1A to capture an image of the subject F, and an optical image of the subject F is acquired by the optical image processing module 83 (step S202, acquisition step). Next, the first relationship data indicating the relationship between the pixel value and the standard deviation is calculated by the optical image processing module 83 on the basis of the information accepted in step S201 (step S203: calculation step).

Next, a noise map and a parameter map are generated by the optical image processing module 83 on the basis of the optical image acquired in step S202 and the first relationship data (step S204: setting step). Further, while the parameters of the bilateral filter are set for each pixel by the optical image processing module 83 on the basis of the parameter map, the noise removal process is executed on the optical image using the set bilateral filter (step S205: processing step). Finally, the optical image that has undergone the noise removal process is stored by the optical image processing module 83 (step S106).

The noise removal process corresponding to the standard deviation of the luminance values of each pixel in the optical image is also performed by the optical image processing system 1A according to the second embodiment described above. As a result, it is possible to effectively remove noise from the entire image.

[Modification example]

Although various embodiments of the present invention have been described above, the embodiments of the present invention are not limited to the above embodiments.

In the image acquisition device 1 according to the first embodiment and the optical image processing system 1A according to the second embodiment described above, the bilateral filter was used as an edge-preserving smoothing filter when the noise removal process is executed on an image. As a modification example, in these embodiments, other edge-preserving smoothing filters such as smoothing filters using a non-local means filter (NLM filter), a wavelet, or a total variation filter (TV filter) may be used.

A modification example in a case where an NLM filter is used in the first embodiment will be described. The NLM filter is a non-local means filter that increases the weighting if the surrounding pixels are similar to the pixel of interest and decreases the weighting if the surrounding pixels are not similar to the pixel of interest, and uses the weighting to perform a weighted average of the surrounding pixels to determine the pixel value of the pixel of interest.

The filter processing unit 205 of the control device 20 calculates a weighting parameter w(p, q) of a surrounding pixel q with respect to a pixel of interest p used in the NLM filter according to the following Formula (9).

[Formula 7]

$$w(p,q) = \frac{1}{Z(p)} exp\left(-\frac{max(\|v(p) - v(q)\|_{L_2}^2 - 2\sigma^2, 0)}{h^2}\right) \quad (9)$$

In Formula (9), v(p) is a vector for the similarity of the pixel of interest, v(q) is a vector for the similarity of the surrounding pixels, and $\sigma$ is the noise standard deviation of the image. Such a weighting parameter w(p, q) is calculated to be larger if the similarity between the surrounding pixels and the pixel of interest is high. When the weighting parameter w(p, q) for each pixel of interest in Formula (9) is calculated, the filter processing unit 205 refers to the parameter map generated by the parameter setting unit 204 and performs the calculation by substituting the parameter $2\times\sigma^2$ associated with each pixel of interest on the parameter map for "$2\sigma^2$" in Formula (9). Further, the filter processing unit 205 executes the noise removal process on the X-ray image using the NLM filter to which the weighting parameter w(p, q) calculated for each pixel of interest and each surrounding pixel is applied.

Such a modification example also allows the parameters of the NLM filter to be optimized for each pixel using the standard deviation of the pixel values of each pixel. As a result, it is possible to effectively remove noise while preserving the edges of the image throughout the entire image.

A modification example in a case where a smoothing filter using a wavelet is used in the first embodiment will be described. The noise removal process based on the smoothing filter using a wavelet is executed by sequentially performing wavelet transform, shrinkage, and inverse wavelet transform. In the shrinkage, a thresholding process is performed on the wavelet coefficients, and in the inverse wavelet transform, inverse wavelet transform is performed using the wavelet coefficients that has undergone the thresholding process.

The filter processing unit 205 of the control device 20 executes the noise removal process on the X-ray image using a smoothing filter that utilizes a wavelet with parameters set for each pixel. At that time, the filter processing unit 205 refers to the value of the standard deviation associated with each pixel on the noise map in the erosion process, and determines a threshold for each pixel from the value.

Such a modification example also allows the threshold used in the smoothing filter using a wavelet to be optimized for each pixel using the standard deviation of the pixel values of each pixel. As a result, it is possible to effectively remove noise while preserving the edges of the image throughout the entire image.

In the above embodiment, the calculation step may include calculating the relationship between the luminance value and the statistical value through a simulation. In the above embodiment, the relationship calculation unit may calculate the relationship between the luminance value and the statistical value through a simulation. This makes it possible to set appropriate parameters for each pixel of an image using a simulation, and to appropriately remove noise from the entire image.

In addition, the above embodiment may further include an input step of accepting an input of information from a user, and the calculation step may include calculating the relationship between the luminance value and the statistical value on the basis of the input information. In addition, the above embodiment may further include an input unit configured to accept an input of information from a user, and the relationship calculation unit may calculate the relationship between the luminance value and the statistical value on the basis of the input information. According to the above configuration, it is possible to set appropriate parameters for each pixel of the image using the input information, and to appropriately remove noise from the entire image.

The above embodiment may further include a detection device configured to detect the image to be processed. According to the above configuration, it is possible to effectively remove noise in an image acquired within the device that detects an image.

Further, the above embodiment may further include another acquisition step of acquiring a test image, and the calculation step may include calculating the relationship between the luminance value and the statistical value on the basis of the acquired test image. Further, in the above embodiment, the relationship calculation unit may calculate the relationship between the luminance value and the statistical value on the basis of the measured test image. According to this configuration, it is possible to set appropriate parameters for each pixel of the image by analyzing the test image, and to appropriately remove noise from the entire image.

In the above embodiment, the statistical value may be a standard deviation or a variance. This makes it possible to set the parameters of the edge-preserving smoothing filter to appropriate values for each pixel, and to appropriately remove noise from the entire image.

In the above embodiment, the edge-preserving smoothing filter may be a bilateral filter or a non-local means filter. This makes it possible to appropriately remove noise from the entire image by setting parameters on the basis of the statistical value of the luminance values for each pixel.

The image processing method of the embodiment is [1] "an image processing method comprising: a calculation step of calculating a relationship between luminance values in an image and a statistical value of the luminance values; an acquisition step of acquiring an image to be processed; a setting step of specifying the statistical value for each pixel of the image on the basis of a luminance value for each pixel of the image and the relationship, and setting parameters of an edge-preserving smoothing filter for each pixel of the image on the basis of the specified statistical value; and a processing step of processing the image using the edge-preserving smoothing filter in which the parameters are set for each pixel of the image."

The image processing method of the embodiment may be [2] "the image processing method according to the above [1], wherein the calculation step includes calculating the relationship between the luminance value and the statistical value through a simulation."

The image processing method of the embodiment may be [3] "the image processing method according to the above [2], further comprising an input step of accepting an input of information from a user, wherein the calculation step includes calculating the relationship between the luminance value and the statistical value on the basis of the input information."

The image processing method of the embodiment may be [4] "the image processing method according to the above [1], further comprising another acquisition step of acquiring a test image, wherein the calculation step includes calculating the relationship between the luminance value and the statistical value on the basis of the acquired test image."

The image processing method of the embodiment may be [5] "the image processing method according to any one of the above [1] to [4], wherein the statistical value is a standard deviation or a variance."

The image processing method of the embodiment may be [6] "the image processing method according to any one of the above [1] to [5], wherein the edge-preserving smoothing filter is a bilateral filter or a non-local means filter."

The image processing device of the embodiment may be [7] "an image processing device comprising: a relationship calculation unit configured to calculate a relationship between luminance values in an image and a statistical value of the luminance values; and an image processing unit configured to process an image to be processed, wherein the image processing unit specifies the statistical value for each pixel of the image on the basis of a luminance value for each pixel of the image and the relationship, and sets parameters of an edge-preserving smoothing filter for each pixel of the image on the basis of the specified statistical value, and processes the image using the edge-preserving smoothing filter in which the parameters are set for each pixel of the image."

The image processing device of the embodiment may be [8] "the image processing device according to the above [7], wherein the relationship calculation unit calculates the relationship between the luminance value and the statistical value through a simulation."

The image processing device of the embodiment may be [9] "the image processing device according to the above [8], further comprising an input unit configured to accept an input of information from a user, wherein the relationship calculation unit calculates the relationship between the luminance value and the statistical value on the basis of the input information."

The image processing device of the embodiment may be [10] "the image processing device according to any one of the above [7] to [9], further comprising a detection device configured to detect the image to be processed."

The image processing device of the embodiment may be [11] "the image processing device according to the above [7], wherein the relationship calculation unit calculates the relationship between the luminance value and the statistical value on the basis of a measured test image."

The image processing device of the embodiment may be [12] "the image processing device according to any one of the above [7] to [11], wherein the statistical value is a standard deviation or a variance."

The image processing device of the embodiment may be [13] "the image processing device according to any one of the above [7] to [12], wherein the edge-preserving smoothing filter is a bilateral filter or a non-local means filter."

**Reference Signs List**

1 Image acquisition device
1A Optical image processing system
20 Control device
40, 85 Input device (input unit)
10 X-ray detection camera (detection device)
82 Camera (detection device)
83 Optical image processing module
132, 202 Relationship calculation unit
134, 204 Parameter setting unit (image processing unit)
135, 205 Filter processing unit (image processing unit)
F Subject

**Claims**

1.  An image processing method comprising:

    a calculation step of calculating a relationship between luminance values in an image and a statistical value of the luminance values;
    an acquisition step of acquiring an image to be processed;
    a setting step of specifying the statistical value for each pixel of the image on the basis of a luminance value for each pixel of the image and the relationship, and setting parameters of an edge-preserving smoothing filter for each pixel of the image on the basis of the specified statistical value; and
    a processing step of processing the image using the edge-preserving smoothing filter in which the parameters are set for each pixel of the image.

2.  The image processing method according to claim 1, wherein the calculation step includes calculating the relationship between the luminance value and the statistical value through a simulation.

3.  The image processing method according to claim 2, further comprising an input step of accepting an input of information from a user,
    wherein the calculation step includes calculating the relationship between the luminance value and the statistical value on the basis of the input information.

4.  The image processing method according to claim 1, further comprising another acquisition step of acquiring a test image,
    wherein the calculation step includes calculating the relationship between the luminance value and the statistical value on the basis of the acquired test image.

5.  The image processing method according to any one of claims 1 to 4, wherein the statistical value is a standard deviation or a variance.

6.  The image processing method according to any one of claims 1 to 5, wherein the edge-preserving smoothing filter is a bilateral filter or a non-local means filter.

7.  An image processing device comprising:

    a relationship calculation unit configured to calculate a relationship between luminance values in an image and a statistical value of the luminance values; and
    an image processing unit configured to process an image to be processed,
    wherein the image processing unit
    specifies the statistical value for each pixel of the image on the basis of a luminance value for each pixel of the image and the relationship, and sets parameters of an edge-preserving smoothing filter for each pixel of the image on the basis of the specified statistical value, and
    processes the image using the edge-preserving smoothing filter in which the parameters are set for each pixel of the image.

8.  The image processing device according to claim 7, wherein the relationship calculation unit calculates the relationship between the luminance value and the statistical value through a simulation.

9.  The image processing device according to claim 8, further comprising an input unit configured to accept an input of information from a user,
    wherein the relationship calculation unit calculates the relationship between the luminance value and the statistical value on the basis of the input information.

10. The image processing device according to any one of claims 7 to 9, further comprising a detection device configured to detect the image to be processed.

11. The image processing device according to claim 7, wherein the relationship calculation unit calculates the relationship between the luminance value and the statistical value on the basis of a measured test image.

12. The image processing device according to any one of claims 7 to 11, wherein the statistical value is a standard deviation or a variance.

13. The image processing device according to any one of claims 7 to 12, wherein the edge-preserving smoothing filter is a bilateral filter or a non-local means filter.

14. An image processing program causing a processor to function as:

    a relationship calculation unit configured to calculate a relationship between luminance values in an image and a statistical value of the luminance values; and
    an image processing unit configured to process an image to be processed,
    wherein the image processing unit
    specifies the statistical value for each pixel of the image on the basis of a luminance value for each pixel of the image and the relationship, and sets parameters of an edge-preserving smoothing filter for each pixel of the image on the basis of the specified statistical value, and
    processes the image using the edge-preserving smoothing filter in which the parameters are set for each pixel of the image.

Fig.1

# Fig.2

20

101
CPU

104
COMMUNICATION MODULE

105
GPU

106
INPUT AND OUTPUT MODULE

102
RAM

103
ROM

**Fig.3**

CONTROL DEVICE (20)

- 201 — IMAGE ACQUISITION UNIT
- 202 — RELATIONSHIP CALCULATION UNIT
- 203 — NOISE MAP GENERATION UNIT
- 204 — PARAMETER SETTING UNIT
- 205 — FILTER PROCESSING UNIT

207 — IMAGE

EP 4 679 360 A1

*Fig.4*

G1

# Fig.5

```
        ┌──────────────┐
        │    START     │
        └──────────────┘
               │
┌──────────────────────────────────┐
│   ACCEPT INFORMATION FROM USER   │──S101
└──────────────────────────────────┘
               │
┌──────────────────────────────────┐
│        ACQUIRE X-RAY IMAGE       │──S102
└──────────────────────────────────┘
               │
┌──────────────────────────────────┐
│  CALCULATE RELATIONSHIP BETWEEN  │──S103
│ PIXEL VALUE AND STANDARD DEVIATION│
└──────────────────────────────────┘
               │
┌──────────────────────────────────┐
│        GENERATE NOISE MAP        │──S104
│        AND PARAMETER MAP         │
└──────────────────────────────────┘
               │
┌──────────────────────────────────┐
│   EXECUTE NOISE REMOVAL PROCESS  │──S105
│ WHILE SETTING PARAMETERS OF FILTER│
└──────────────────────────────────┘
               │
┌──────────────────────────────────┐
│        STORE X-RAY IMAGE         │──S106
└──────────────────────────────────┘
               │
        ┌──────────────┐
        │     END      │
        └──────────────┘
```

# Fig.6

(a)

(b)

*Fig.7*

(a)

(b)

# Fig.8

EP 4 679 360 A1

Fig.9

G1

## Fig.10

```
                    ( START )
                        |
        ┌───────────────────────────────┐
        │   ACCEPT INFORMATION FROM USER │─── S201
        └───────────────────────────────┘
                        |
        ┌───────────────────────────────┐
        │      ACQUIRE OPTICAL IMAGE     │─── S202
        └───────────────────────────────┘
                        |
        ┌───────────────────────────────┐
        │  CALCULATE RELATIONSHIP BETWEEN│─── S203
        │ PIXEL VALUE AND STANDARD DEVIATION│
        └───────────────────────────────┘
                        |
        ┌───────────────────────────────┐
        │       GENERATE NOISE MAP       │─── S204
        │       AND PARAMETER MAP        │
        └───────────────────────────────┘
                        |
        ┌───────────────────────────────┐
        │  EXECUTE NOISE REMOVAL PROCESS │─── S205
        │ WHILE SETTING PARAMETERS OF FILTER│
        └───────────────────────────────┘
                        |
        ┌───────────────────────────────┐
        │       STORE OPTICAL IMAGE      │─── S206
        └───────────────────────────────┘
                        |
                    ( END )
```

## INTERNATIONAL SEARCH REPORT

| International application No. |
| --- |
| **PCT/JP2023/043532** |

| A. | CLASSIFICATION OF SUBJECT MATTER |
| --- | --- |

*G06T 5/70*(2024.01)i; *G01N 23/04*(2018.01)i; *G01N 23/10*(2018.01)i; *G01N 23/18*(2018.01)i
FI: G06T5/70; G01N23/04; G01N23/10; G01N23/18

According to International Patent Classification (IPC) or to both national classification and IPC

| B. | FIELDS SEARCHED |
| --- | --- |

Minimum documentation searched (classification system followed by classification symbols)

G06T5/70; G01N23/04; G01N23/10; G01N23/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2010-252265 A (OLYMPUS CORPORATION) 04 November 2010 (2010-11-04) paragraphs [0017]-[0038], fig. 1-6 | 1, 4-5, 7, 10-12, 14 |
| Y | | 2-3, 6, 8-9, 13 |
| Y | JP 2006-87030 A (OLYMPUS CORPORATION) 30 March 2006 (2006-03-30) paragraphs [0027]-[0040] | 2-3, 6, 8-9, 13 |
| Y | JP 2010-178302 A (OLYMPUS CORPORATION) 12 August 2010 (2010-08-12) paragraphs [0006]-[0010] | 6, 13 |
| Y | JP 2017-130168 A (CANON KABUSHIKI KAISHA) 27 July 2017 (2017-07-27) paragraphs [0046]-[0067] | 6, 13 |
| A | US 2007/0009175 A1 (HEWLETT PACKARD COMPANY) 11 January 2007 (2007-01-11) entire text, all drawings | 1-14 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 February 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/043532**

| Patent document cited in search report | | | Publication date (day/month/year) | Patent family member(s) | Publication date (day/month/year) |
|---|---|---|---|---|---|
| JP | 2010-252265 | A | 04 November 2010 | (Family: none) | |
| JP | 2006-87030 | A | 30 March 2006 | US 2006/0204126 A1 paragraphs [0039]-[0051] | |
| JP | 2010-178302 | A | 12 August 2010 | US 2010/0194933 A1 paragraphs [0009]-[0013] | |
| JP | 2017-130168 | A | 27 July 2017 | (Family: none) | |
| US | 2007/0009175 | A1 | 11 January 2007 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AKIHIRO YOZA**. Determination of Optimal Parameters for Bilateral Filter for Medical Images. *IEEJ Transactions on Electronics, Information and Systems*, 2019, vol. 139 (9), 1008-1014

- **HAYATO HASHII**. Parameter Tuning of Bilateral Filter Based on Hellinger Distance. *26th Fuzzy System Symposium, Hiroshima*, 13 September 2010